# EUROPEAN PATENT APPLICATION

(11) **EP 4 613 678 A1**
(43) Date of publication of application: **10.09.2025**
(21) Application number: 24883592.8
(22) Date of filing: 21.05.2024
(51) Int. Cl.: B65G 37/00, B65G 47/90, B65G 47/91, B65G 13/00, H01M 10/04, H01M 6/00

(54) **BARE CELL CASING PRODUCTION LINE AND BATTERY CELL PRODUCTION LINE**

(30) Priority: 23.01.2024 CN 202410090105
(71) Applicant: Contemporary Amperex Technology Co., Limited, Jiaocheng District Ningde Fujian 352100 (CN)
(72) Inventor: ZHENG, Zhijian, Ningde, Fujian 352100 (CN); WANG, Dongsheng, Ningde, Fujian 352100 (CN); FAN, Xiang, Ningde, Fujian 352100 (CN); DONG, Huihua, Ningde, Fujian 352100 (CN); HONG, Chang, Ningde, Fujian 352100 (CN); QUE, Tianxiang, Ningde, Fujian 352100 (CN); NIE, Wenqing, Ningde, Fujian 352100 (CN)
(74) Representative: Frick, Robert
(86) International application number: PCT/CN2024/094401
(87) International publication number: WO 2025/156522

(57) **Abstract**

A bare cell encasing production line and a cell production line are provided, relating to the field of battery technology. The bare cell encasing production line includes a bare cell conveying module (1), a cladding material conveying module, and an assembly module. The bare cell conveying module is configured to convey a bare cell; an output end of the cladding material conveying module and the bare cell conveying module are both connected to the assembly module, and the assembly module is configured to assemble the bare cell conveyed by the bare cell conveying module with a cladding material conveyed by the cladding material conveying module; the cladding material conveying module includes a shell material conveying submodule (4); the shell material conveying submodule includes a shell material feeding mechanism (41), at least two shell material preparation assemblies (42), an infeed conveyor line (43), and a transfer mechanism; and the transfer mechanism can lift a shell material preparation assembly from the infeed conveyor line and convey the shell material preparation assembly to one side of the infeed conveyor line. The bare cell encasing production line is configured for bare cell encasing.

## Description

### CROSS-REFERENCE TO RELATED APPLICATIONS

This disclosure claims priority to Chinese Patent Application No. 202410090105.4, filed on January 23, 2024 and entitled "BARE CELL ENCASING PRODUCTION LINE AND CELL PRODUCTION LINE", which is incorporated herein by reference in its entirety.

### TECHNICAL FIELD

This disclosure relates to the field of battery technology, and in particular, to a bare cell encasing production line and a cell production line.

### BACKGROUND

Applications of new energy batteries in daily life and industry are becoming increasingly widespread. For example, new energy vehicles equipped with batteries have been widely used. In addition, batteries are also being increasingly applied in fields such as energy storage.

During a cell production process, a bare cell needs to be assembled with a cladding material. However, in related technologies, after the cladding material in a storage bin is depleted, the production line needs to be stopped to replenish the cladding material in the storage bin, and then the production line is restarted to assemble the cladding material in the storage bin with the bare cell, resulting in low production efficiency.

### SUMMARY

This disclosure provides a bare cell encasing production line and a cell production line, which can improve the production efficiency.

According to a first aspect, this disclosure provides a bare cell encasing production line. The bare cell encasing production line includes a bare cell conveying module, a cladding material conveying module, and an assembly module. The bare cell conveying module is configured to convey a bare cell; the cladding material conveying module includes a feeding mechanism and at least two preparation assemblies, the at least two preparation assemblies are identical to accommodate an identical cladding material, and the feeding mechanism is configured to acquire the identical cladding material from the identical preparation assemblies respectively for conveying; an output end of the cladding material conveying module and the bare cell conveying module are both connected to the assembly module, and the assembly module is configured to assemble the bare cell conveyed by the bare cell conveying module with the cladding material conveyed by the cladding material conveying module; the cladding material conveying module includes a shell material conveying submodule; the shell material conveying submodule includes a shell material feeding mechanism and at least two shell material preparation assemblies; the shell material conveying submodule further includes an infeed conveyor line and a transfer mechanism; the infeed conveyor line extends from an infeed position to a position corresponding to the shell material feeding mechanism; the transfer mechanism has an extended state and a retracted state; and along a height direction of the infeed conveyor line, when the transfer mechanism is in the retracted state, the transfer mechanism does not exceed a side of the infeed conveyor line configured to place the shell material preparation assembly; and when the transfer mechanism is in the extended state, the transfer mechanism exceeds the side of the infeed conveyor line configured to place the shell material preparation assembly to lift the shell material preparation assembly from the infeed conveyor line and convey the shell material preparation assembly to one side of the infeed conveyor line, enabling the shell material feeding mechanism to acquire a shell material from the at least two shell material preparation assemblies respectively for conveying.

By enabling the feeding mechanism to acquire the identical cladding material from the identical preparation assemblies respectively for conveying, when the feeding mechanism acquires the cladding material from one preparation assembly for conveying, the remaining identical preparation assemblies are in an idle state, facilitating replenishment, so that during operation of the bare cell encasing production line, at least one of all identical preparation assemblies accommodates the cladding material, the feeding mechanism can always acquire the cladding material for conveying, and the bare cell encasing production line does not need to stop when the cladding material on one preparation assembly is depleted, which is conducive to improving the production efficiency. By enabling the transfer mechanism to transfer the shell material preparation assembly on the infeed conveyor line to one side of the infeed conveyor line, the infeed conveyor line can drive the at least two shell material preparation assemblies from the infeed position to the position corresponding to the shell material feeding mechanism respectively, enabling the shell material feeding mechanism to acquire the shell material from the at least two shell material preparation assemblies respectively for conveying, achieving non-stop operation of the bare cell encasing production line, which is relatively convenient to implement.

For example, after the cladding material on a first preparation assembly is depleted, the feeding mechanism can acquire the identical cladding material from an identical second preparation assembly for conveying, enabling the assembly module to still assemble the cladding material with the bare cell. When the feeding mechanism acquires the cladding material from the second preparation assembly, the first preparation assembly is in an idle state, facilitating replenishment, and when the cladding material on the second preparation assembly is depleted, the feeding mechanism can switch to acquiring the cladding material from the first preparation assembly, and the bare cell encasing production line does not need to stop, which is conducive to improving the production efficiency.

In some implementations of this disclosure, the cladding material conveying module includes a film material conveying submodule, the film material conveying submodule includes a film material feeding mechanism and at least two film material preparation assemblies, and the film material feeding mechanism is configured to acquire a film material from the at least two film material preparation assemblies respectively for conveying.

By enabling the film material feeding mechanism to acquire the film material from the at least two film material preparation assemblies respectively for conveying, when the film material feeding mechanism acquires the film material from one film material preparation assembly for conveying, the remaining film material preparation assemblies are in an idle state, facilitating replenishment, so that during operation of the bare cell encasing production line, at least one of all film material preparation assemblies accommodates the film material, the film material feeding mechanism can always acquire the film material for conveying, and the bare cell encasing production line does not need to stop when the film material on one film material preparation assembly is depleted, which is conducive to improving the production efficiency.

In some implementations of this disclosure, the film material feeding mechanism includes a first frame and a film material pickup member, the first frame is relatively fixed to the at least two film material preparation assemblies, and the film material pickup member is movably disposed on the first frame, enabling the film material pickup member to move relative to the first frame to positions corresponding to the at least two film material preparation assemblies respectively so as to acquire the film material from the at least two film material preparation assemblies respectively, so that the film material feeding mechanism acquires the film material from the at least two film material preparation assemblies respectively for conveying.

By enabling the first frame to be relatively fixed to the at least two film material preparation assemblies, and the film material pickup member to move relative to the first frame to the positions corresponding to the at least two film material preparation assemblies respectively so as to acquire the film material for conveying, the structure of the film material feeding mechanism is relatively simple and convenient to implement.

In some implementations of this disclosure, the at least two film material preparation assemblies are arranged along a first direction; the first frame spans across the at least two film material preparation assemblies along the first direction, and the film material pickup member is slidably connected to the first frame along the first direction, enabling the film material pickup member to move along the first direction to positions flush with the at least two film material preparation assemblies respectively so as to acquire the film material from the at least two film material preparation assemblies respectively for conveying.

By enabling the first frame to span across the at least two film material preparation assemblies along the first direction, and the film material pickup member to slide relative to the first frame along the first direction to move to the positions corresponding to the at least two film material preparation assemblies, the structure of the feeding mechanism is relatively simple and convenient to implement.

In some implementations of this disclosure, the film material preparation assembly includes a base preparation member and a film preparation member, and the base preparation member and the film preparation member are arranged along the first direction.

By enabling the base preparation member and the film preparation member to be arranged along the first direction, the film material pickup member can slide relative to the first frame to move to positions corresponding to the base preparation member and the film preparation member respectively, that is, one film material pickup member can achieve material pickup from the base preparation member and the film preparation member, which is convenient to implement and conducive to reducing costs. Moreover, even if two film material pickup members are provided, and the two film material pickup members acquire the film material from the base preparation member and the film preparation member respectively, the base preparation member and the film preparation member being arranged along the first direction enables the two film material pickup members to be connected to the first frame via a same slide rail extending along the first direction, which is convenient to implement and conducive to reducing costs.

In some implementations of this disclosure, the number of the film material pickup members is at least two, and the at least two film material pickup members include a base pickup member and a film pickup member; and along the first direction, all base preparation members are adjacently disposed, and all film preparation members are adjacently disposed.

By enabling all base preparation members to be adjacently disposed and all film preparation members to be adjacently disposed, the risk of interference during movement of the base pickup member and the film pickup member relative to the frame is reduced.

In some implementations of this disclosure, the film material preparation assembly includes a base preparation member and/or a film preparation member; the first frame is relatively fixed to a hot-melt machine; and along the first direction, the film material pickup member is capable of moving relative to the first frame to a position flush with the hot-melt machine so as to convey the base and/or the film from the film material preparation assembly to the hot-melt machine to form a cell film.

By enabling the film material pickup member to slide relative to the first frame to move to positions flush with the film material preparation assembly and the hot-melt machine respectively to convey the base and/or the film to the hot-melt machine, and enabling the hot-melt machine to hot-melt the base and the film to form the cell film, the structure of the film material feeding mechanism is relatively simple and convenient to implement.

In some implementations of this disclosure, along the first direction, among the hot-melt machine and all film material preparation assemblies, all film material preparation assemblies are adjacently disposed.

By enabling all film material preparation assemblies to be adjacently disposed, and the hot-melt machine to be disposed on one side of all film material preparation assemblies, a space around the hot-melt machine is relatively large, facilitating provision of a conveying mechanism near the hot-melt machine to convey the cell film formed by the hot-melt machine to the assembly module.

In some implementations of this disclosure, the infeed conveyor line is an infeed roller conveyor; a first gap is provided between two adjacent rollers of the infeed roller conveyor along a length direction of the infeed roller conveyor; and the transfer mechanism is disposed corresponding to the first gap, enabling the transfer mechanism to pass through the first gap along a height direction of the infeed roller conveyor so as to lift the shell material preparation assembly from the infeed roller conveyor.

By enabling the transfer mechanism to pass through the first gap to lift the shell material preparation assembly from the infeed roller conveyor, the transfer mechanism can support a middle portion of the shell material preparation assembly along the length direction of the infeed roller conveyor so as to lift the shell material preparation assembly from the infeed roller conveyor; and a supporting effect of the transfer mechanism on the shell material preparation assembly is relatively stable.

In some implementations of this disclosure, the first gap penetrates a first side of the infeed roller conveyor along a width direction of the infeed roller conveyor; the shell material conveying submodule further includes an outfeed roller conveyor, a second gap is provided between two adjacent rollers of the outfeed roller conveyor along an outfeed direction, and the second gap penetrates a first side of the outfeed roller conveyor along a width direction of the outfeed roller conveyor, enabling the transfer mechanism to move from the first gap to the second gap through the first side of the infeed roller conveyor and the first side of the outfeed roller conveyor so as to drive the shell material preparation assembly to move from the infeed roller conveyor to the outfeed roller conveyor, so that the outfeed roller conveyor conveys the shell material preparation assembly to an outfeed bracket.

By enabling the transfer mechanism to drive the shell material preparation assembly to move away from the infeed roller conveyor through the first side of the infeed roller conveyor, transfer of the shell material preparation assembly is relatively convenient. By enabling the transfer mechanism to move to the second gap through the first side of the outfeed roller conveyor so as to drive the shell material preparation assembly to move from the infeed roller conveyor to the outfeed roller conveyor, when the transfer mechanism places the shell material preparation assembly onto the outfeed roller conveyor, a supporting area of the outfeed roller conveyor for the shell material preparation assembly is relatively large, making a supporting effect of the outfeed roller conveyor on the shell material preparation assembly relatively stable.

In some implementations of this disclosure, the first gap penetrates a first side of the infeed roller conveyor along a width direction of the infeed roller conveyor; the shell material conveying submodule further includes an outfeed roller conveyor, a second gap is provided between adjacent rollers of the outfeed roller conveyor along the outfeed direction, and the second gap penetrates a first side of the outfeed roller conveyor along a width direction of the outfeed roller conveyor; the transfer mechanism includes a lifting member and a transfer conveyor line disposed at a top end of the lifting member, and when the transfer mechanism is in the extended state, one end of the lifting member is located in the first gap, and another end extends to the second gap through the first side of the infeed roller conveyor and the first side of the outfeed roller conveyor; and an extension path of the transfer conveyor line matches an extension path of the lifting member, enabling the transfer conveyor line to convey the shell material preparation assembly from the infeed roller conveyor to the outfeed roller conveyor, so that the outfeed roller conveyor conveys the shell material preparation assembly to the outfeed bracket.

By enabling the lifting member to extend to one side of the infeed roller conveyor through the first side of the infeed roller conveyor, the transfer conveyor line disposed on the lifting member can convey the shell material preparation assembly to one side of the infeed roller conveyor along the width direction of the infeed roller conveyor, which is convenient to implement. By enabling the lifting member to extend to the second gap of the outfeed roller conveyor through the first side of the outfeed roller conveyor, the transfer conveyor line disposed on the lifting member can convey the shell material preparation assembly to the outfeed roller conveyor along the width direction of the outfeed roller conveyor, which is convenient to implement. Moreover, when the transfer mechanism places the shell material preparation assembly onto the outfeed roller conveyor, the supporting area of the outfeed roller conveyor for the shell material preparation assembly is relatively large, making the supporting effect of the outfeed roller conveyor on the shell material preparation assembly relatively stable.

In some implementations of this disclosure, the outfeed roller conveyor and the infeed roller conveyor are arranged along the width direction of the infeed roller conveyor.

By enabling the outfeed roller conveyor and the infeed roller conveyor to be arranged along the width direction of the infeed roller conveyor, the transfer mechanism only needs to drive the shell material preparation assembly to move along the width direction of the outfeed roller conveyor so as to convey the shell material preparation assembly to the outfeed roller conveyor, which is convenient to implement.

In some implementations of this disclosure, the width direction of the outfeed roller conveyor is parallel to the width direction of the infeed roller conveyor.

By enabling the width direction of the outfeed roller conveyor to be parallel to the width direction of the infeed roller conveyor, during a process in which the shell material preparation assembly moves from the infeed roller conveyor to the outfeed roller conveyor, a movement path does not need to have a significant bend, which is convenient to implement.

In some implementations of this disclosure, the outfeed roller conveyor includes a first roller and a second roller, the first roller and the second roller forming the first gap; the outfeed roller conveyor includes a third roller and a fourth roller, the third roller and the fourth roller forming the second gap; and along the length direction of the infeed roller conveyor, the first roller is flush with the third roller, and the second roller is flush with the fourth roller.

By enabling the first roller to be flush with the third roller and the second roller to be flush with the fourth roller along the length direction of the infeed roller conveyor, a portion of the transfer mechanism supporting the shell material preparation assembly only needs to move along the width direction of the outfeed roller conveyor so as to convey the shell material preparation assembly to the outfeed roller conveyor, which is convenient to implement.

In some implementations of this disclosure, the height direction of the outfeed roller conveyor is parallel to a height direction of the infeed roller conveyor.

By enabling the height direction of the outfeed roller conveyor to be parallel to the height direction of the infeed roller conveyor, during a process in which the shell material preparation assembly is transferred from the infeed roller conveyor to the outfeed roller conveyor, a posture of the shell material preparation assembly does not need to undergo significant changes, and the outfeed roller conveyor can provide relatively stable support to the shell material preparation assembly, facilitating convenient implementation of the transfer mechanism for transferring the shell material preparation assembly.

In some implementations of this disclosure, the cladding material conveying module includes an adhesive material conveying submodule, the adhesive material conveying submodule includes an adhesive material feeding mechanism and at least two adhesive material preparation assemblies, and the adhesive material feeding mechanism is configured to acquire an adhesive material from the at least two adhesive material preparation assemblies respectively for conveying.

By enabling the adhesive material feeding mechanism to acquire the adhesive material from the at least two adhesive material preparation assemblies respectively for conveying, when the adhesive material feeding mechanism acquires the adhesive material from one adhesive material preparation assembly for conveying, the remaining adhesive material preparation assemblies are in an idle state, facilitating replenishment, so that during operation of the bare cell encasing production line, at least one of all adhesive material preparation assemblies accommodates the adhesive material, the adhesive material feeding mechanism can always acquire the adhesive material for conveying, and the bare cell encasing production line does not need to stop when the adhesive material on one adhesive material preparation assembly is depleted, which is conducive to improving the production efficiency.

In some implementations of this disclosure, the adhesive material feeding mechanism includes a second frame and an adhesive material pickup member, the second frame is relatively fixed to the at least two adhesive material preparation assemblies, and the adhesive material pickup member is movably disposed on the second frame, enabling the adhesive material pickup member to move relative to the second frame to positions corresponding to the at least two adhesive material preparation assemblies respectively so as to acquire the adhesive material from the at least two adhesive material preparation assemblies respectively, so that the adhesive material feeding mechanism acquires the adhesive material from the at least two adhesive material preparation assemblies respectively for conveying.

By enabling the second frame to be relatively fixed to the at least two adhesive material preparation assemblies, and the adhesive material pickup member to move relative to the second frame to the positions corresponding to the at least two adhesive material preparation assemblies respectively so as to acquire the adhesive material for conveying, the structure of the adhesive material feeding mechanism is relatively simple and convenient to implement.

In some implementations of this disclosure, the at least two adhesive material preparation assemblies are arranged along a second direction; and the adhesive material pickup member is slidably connected to the second frame along the second direction, enabling the adhesive material pickup member to move to the positions corresponding to the at least two adhesive material preparation assemblies respectively.

By enabling the second frame to span across the at least two adhesive material preparation assemblies along the second direction, and the adhesive material pickup member to slide relative to the second frame along the second direction to move to the positions corresponding to the at least two adhesive material preparation assemblies, the structure of the feeding mechanism is relatively simple and convenient to implement.

In some implementations of this disclosure, the cladding material conveying module further includes a film material conveying submodule and an adhesive material conveying submodule; the film material conveying submodule includes a film material feeding mechanism and at least two film material preparation assemblies, and the film material feeding mechanism is configured to acquire the film material from the at least two film material preparation assemblies respectively for conveying; the adhesive material conveying submodule includes an adhesive material feeding mechanism and at least two adhesive material preparation assemblies, and the adhesive material feeding mechanism is configured to acquire the adhesive material from the at least two adhesive material preparation assemblies respectively for conveying; and along a conveying direction of the bare cell conveying module, an output end of the film material conveying submodule, an output end of the adhesive material conveying submodule, and an output end of the shell material conveying submodule are sequentially arranged.

By enabling the film material feeding mechanism, the adhesive material preparation assemblies, and the shell material feeding mechanism to acquire the film material from the at least two corresponding preparation assemblies respectively for conveying, the film material conveying submodule, the shell material conveying submodule, and the adhesive material conveying submodule can all perform non-stop feeding, which is conducive to improving the production efficiency.

According to a second aspect, this disclosure provides a cell production line. The cell production line includes a welding device, a conveying device, and the bare cell encasing production line provided in the first aspect of this disclosure. The welding device is configured to weld a cover material with a shell material; and the conveying device is configured to convey an assembly of a bare cell and the shell material from the bare cell encasing production line to the welding device.

The cell production line provided by this disclosure includes the bare cell encasing production line provided in the first aspect of this disclosure, achieving the same effect, that is, being conducive to improving the production efficiency.

### BRIEF DESCRIPTION OF DRAWINGS

Persons of ordinary skill in the art will be clear about various other advantages and benefits by reading the detailed description of the preferred embodiments below. The accompanying drawings are merely intended to illustrate the preferred embodiments and are not intended to limit this disclosure. Moreover, throughout the accompanying drawings, the same reference signs represent the same parts. In the accompanying drawings:
FIG. 1 is a schematic structural diagram of a bare cell encasing production line according to some embodiments of this disclosure;
FIG. 2 is a schematic structural diagram of a film material conveying submodule from a first perspective according to some embodiments of this disclosure;
FIG. 3 is a schematic structural diagram of a film material conveying submodule from a second perspective according to some embodiments of this disclosure;
FIG. 4 is a schematic structural diagram of a shell material conveying submodule from a first perspective according to some embodiments of this disclosure;
FIG. 5 is a schematic structural diagram of a shell material conveying submodule from a second perspective according to some embodiments of this disclosure; and
FIG. 6 is a schematic structural diagram of an adhesive material conveying submodule according to some embodiments of this disclosure.

### Description of reference signs:

1. bare cell conveying module; 21. film material assembly submodule; 22. shell material assembly submodule; 23. adhesive material assembly submodule; 3. film material conveying submodule; 31. first frame; 32. base preparation member; 33. film preparation member; 34. hot-melt machine; 4. shell material conveying submodule; 41. shell material feeding mechanism; 42. shell material preparation assembly; 43. infeed conveyor line; 44. outfeed roller conveyor; 5. adhesive material conveying submodule; 51. adhesive material preparation assembly; 52. second frame; 53. adhesive material pickup member; 6. cell combining module; 7. double-layer internal circulation channel; 8. side hot-melt module; a. first direction; b. length direction of infeed roller conveyor; c. width direction of infeed roller conveyor; and d. second direction.

### DESCRIPTION OF EMBODIMENTS

Embodiments of the technical solutions of this disclosure will be described in detail below with reference to the accompanying drawings. The following embodiments are only used to more clearly illustrate the technical solutions of this disclosure, and thus are only examples and cannot be used to limit the scope of protection of this disclosure.

Unless otherwise defined, all technical and scientific terms used herein have the same meanings as commonly understood by persons skilled in the technical field of this disclosure; and terms used herein are only for the purpose of describing specific embodiments and are not intended to limit this disclosure.

Reference to "embodiment" in the specification means that specific features, structures, or characteristics described with reference to an embodiment may be included in at least one embodiment of this disclosure. The phrase appearing in various places in this specification does not necessarily refer to the same embodiment or an independent or alternative embodiment that is exclusive of other embodiments. Persons skilled in the art explicitly and implicitly understand that some embodiments described herein may be combined with other embodiments.

In the description of the embodiments of this disclosure, the terms "first", "second", "third", and the like are merely intended to distinguish between different objects, and shall not be understood as any indication or implication of relative importance or any implicit indication of the number, sequence or primary-secondary relationship of the technical features indicated. In some embodiments of this disclosure, "first", "second", "third", and the like may also refer to the same object. In the description of the embodiments of this disclosure, "multiple" means two or more, unless otherwise explicitly and specifically limited.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the description of the embodiments of this disclosure, unless otherwise explicitly specified and limited, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand the specific meanings of the above terms in the embodiments of this disclosure based on specific circumstances.

Currently, applications of new energy batteries in daily life and industry are becoming increasingly widespread. New energy batteries are not only applied to energy storage power systems such as hydropower, thermal power, wind power, and solar power stations, but are also widely used in electric transportation tools such as electric bicycles, electric motorcycles, and electric vehicles, as well as in aerospace and other fields. With the continuous expansion of application fields of traction batteries, a market demand for traction batteries is also continuously increasing.

The following provides a detailed description of this disclosure.

During a cell production process, a bare cell needs to be assembled with a cladding material. However, in related technologies, after the cladding material in a storage bin is depleted, the production line needs to be stopped to replenish the cladding material in the storage bin, and then the production line is restarted to assemble the cladding material in the storage bin with the bare cell, resulting in low production efficiency.

This disclosure provides a bare cell encasing production line. The bare cell encasing production line includes a bare cell conveying module, a cladding material conveying module, and an assembly module. The bare cell conveying module is configured to convey a bare cell; the cladding material conveying module includes a feeding mechanism and at least two preparation assemblies, and the feeding mechanism is configured to acquire an identical cladding material from identical preparation assemblies respectively for conveying; an output end of the cladding material conveying module and the bare cell conveying module are both connected to the assembly module; and the assembly module is configured to assemble the bare cell conveyed by the bare cell conveying module with the cladding material conveyed by the cladding material conveying module. By enabling the feeding mechanism to acquire the identical cladding material from the identical preparation assemblies respectively for conveying, when the feeding mechanism acquires the cladding material from one preparation assembly for conveying, the remaining identical preparation assemblies are in an idle state, facilitating replenishment, so that during operation of the bare cell encasing production line, at least one of all identical preparation assemblies accommodates the cladding material, the feeding mechanism can always acquire the cladding material for conveying, and the bare cell encasing production line does not need to stop when the cladding material on one preparation assembly is depleted, which is conducive to improving the production efficiency.

The bare cell encasing production line provided by this disclosure can be applied to a cell production line, and the cell production line includes a welding device, a conveying device, and the bare cell encasing production line. The welding device is configured to weld a cover material with a shell material; and the conveying device is configured to convey an assembly of a bare cell and the shell material from the bare cell encasing production line to the welding device.

In the embodiments of this disclosure, a cell may be a secondary battery, and the cell may refer to a lithium-ion battery, a sodium-ion battery, a sodium-lithium-ion battery, a lithium metal battery, a sodium metal battery, a sodium-sulfur battery, a magnesium-ion battery, a nickel-hydrogen battery, a nickel-cadmium battery, or a lead-acid battery, and the embodiments of this disclosure do not limit this.

The embodiments of this disclosure are described in detail below with reference to the accompanying drawings.

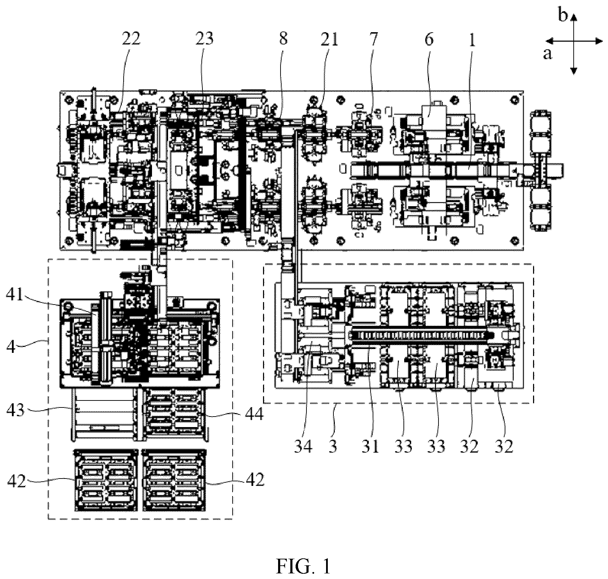

Referring to FIG. 1, FIG. 1 is a schematic structural diagram of a bare cell encasing production line according to some embodiments of this disclosure. The bare cell encasing production line provided by this disclosure includes a bare cell conveying module 1, a cladding material conveying module, and an assembly module. The bare cell conveying module 1 is configured to convey a bare cell; the cladding material conveying module includes a feeding mechanism and at least two preparation assemblies, the at least two preparation assemblies are identical to accommodate an identical cladding material, and the feeding mechanism is configured to acquire the identical cladding material from the identical preparation assemblies respectively for conveying; an output end of the cladding material conveying module and the bare cell conveying module 1 are both connected to the assembly module; and the assembly module is configured to assemble the bare cell conveyed by the bare cell conveying module 1 with the cladding material conveyed by the cladding material conveying module.

The bare cell conveying module 1 in the embodiments of this disclosure may have various implementation forms. For example, in some embodiments of this disclosure, the bare cell conveying module 1 may be a conveyor line.

In the embodiments of this disclosure, the output end of the cladding material conveying module and the bare cell conveying module 1 are both connected to the assembly module, and the assembly module is configured to assemble the bare cell conveyed by the bare cell conveying module 1 with the cladding material conveyed by the cladding material conveying module, that is, the feeding mechanism can convey the cladding material from the preparation assembly to the assembly module, and the bare cell conveying module 1 can convey the bare cell to the assembly module, enabling the assembly module to assemble the bare cell conveyed by the bare cell conveying module 1 with the cladding material conveyed by the cladding material conveying module.

The cladding material in the embodiments of this disclosure may have various implementation forms, and the cladding material may include one type of cladding material or multiple types of cladding materials. For example, the cladding material may include a cell film for cladding the bare cell, an adhesive material for cladding an outer surface of the bare cell, a cell shell for cladding the bare cell, and the like. Correspondingly, the assembly module may have various implementation forms, and the assembly module may include a film cladding submodule configured to clad the cell film onto the bare cell, may include an adhesive material assembly submodule 23 configured to adhere the adhesive material to the outer surface of the bare cell, and may include an encasing submodule configured to encase the bare cell into the cell shell.

The feeding mechanism in the embodiments of this disclosure may include only one type or multiple types. Different types of feeding mechanisms are configured to acquire cladding materials from identical preparation assemblies of corresponding types respectively for conveying, and different types of preparation assemblies can accommodate different types of cladding materials.

By enabling the feeding mechanism to acquire the identical cladding material from the identical preparation assemblies respectively for conveying, when the feeding mechanism acquires the cladding material from one preparation assembly for conveying, the remaining identical preparation assemblies are in an idle state, facilitating replenishment, so that during operation of the bare cell encasing production line, at least one of all identical preparation assemblies accommodates the cladding material, the feeding mechanism can always acquire the cladding material for conveying, and the bare cell encasing production line does not need to stop when the cladding material on one preparation assembly is depleted, which is conducive to improving the production efficiency.

For example, after the cladding material on a first preparation assembly is depleted, the feeding mechanism can acquire the identical cladding material from an identical second preparation assembly for conveying, enabling the assembly module to still assemble the cladding material with the bare cell. When the feeding mechanism acquires the cladding material from the second preparation assembly, the first preparation assembly is in an idle state, facilitating replenishment, and when the cladding material on the second preparation assembly is depleted, the feeding mechanism can switch to acquiring the cladding material from the first preparation assembly, and the bare cell encasing production line does not need to stop, which is conducive to improving the production efficiency.

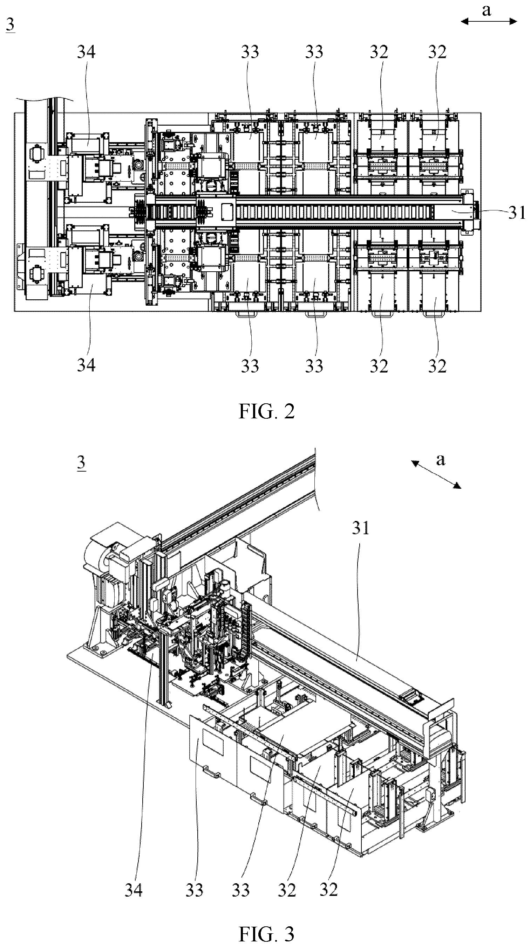

In some embodiments of this disclosure, referring to FIG. 1, FIG. 2, and FIG. 3, the cladding material conveying module includes a film material conveying submodule 3, the film material conveying submodule 3 includes a film material feeding mechanism and at least two film material preparation assemblies, and the film material feeding mechanism is configured to acquire a film material from the at least two film material preparation assemblies respectively for conveying.

The film material feeding mechanism in the embodiments of this disclosure is one type of feeding mechanism included in the cladding material conveying module, that is, the cladding material conveying module may include a plurality of feeding mechanisms, and several of the plurality of feeding mechanisms are film material feeding mechanisms.

The film material preparation assembly in the embodiments of this disclosure is one type of preparation assembly included in the cladding material conveying module, that is, the cladding material conveying module may include a plurality of preparation assemblies, and several of the plurality of preparation assemblies are film material preparation assemblies. All film material preparation assemblies in the embodiments of this disclosure are configured to accommodate film materials, and the film materials that can be accommodated on all film material preparation assemblies are identical. Each film material preparation assembly may accommodate one type of film material or multiple types of film materials.

By enabling the film material feeding mechanism to acquire the film material from the at least two film material preparation assemblies respectively for conveying, when the film material feeding mechanism acquires the film material from one film material preparation assembly for conveying, the remaining film material preparation assemblies are in an idle state, facilitating replenishment, so that during operation of the bare cell encasing production line, at least one of all film material preparation assemblies accommodates the film material, the film material feeding mechanism can always acquire the film material for conveying, and the bare cell encasing production line does not need to stop when the film material on one film material preparation assembly is depleted, which is conducive to improving the production efficiency.

In some embodiments of this disclosure, referring to FIG. 1, FIG. 2, and FIG. 3, the film material feeding mechanism includes a first frame 31 and a film material pickup member, the first frame 31 is relatively fixed to the at least two film material preparation assemblies, and the film material pickup member is movably disposed on the first frame 31, enabling the film material pickup member to move relative to the first frame 31 to positions corresponding to the at least two film material preparation assemblies respectively so as to acquire the film material from the at least two film material preparation assemblies respectively, so that the film material feeding mechanism acquires the film material from the at least two film material preparation assemblies respectively for conveying.

The film material pickup member in the embodiments of this disclosure may have various implementation forms. For example, the film material pickup member may be a suction cup or a gripping mechanism, the suction cup can suck the film material from the film material preparation assembly, and the gripping mechanism can grip the film material from the film material preparation assembly.

By enabling the first frame 31 to be relatively fixed to the at least two film material preparation assemblies, and the film material pickup member to move relative to the first frame 31 to the positions corresponding to the at least two film material preparation assemblies respectively so as to acquire the film material for conveying, the structure of the film material feeding mechanism is relatively simple and convenient to implement.

In some embodiments of this disclosure, referring to FIG. 1, FIG. 2, and FIG. 3, the at least two film material preparation assemblies are arranged along a first direction a; the first frame 31 spans across the at least two film material preparation assemblies along the first direction a, and the film material pickup member is slidably connected to the first frame 31 along the first direction a, enabling the film material pickup member to move along the first direction a to positions flush with at least two film material preparation assemblies respectively so as to acquire the film material from the at least two film material preparation assemblies respectively for conveying.

The first direction a in the embodiments of this disclosure may extend along a straight line or may not extend along a straight line, such as extending along a curve or a polyline.

By enabling the first frame 31 to span across the at least two film material preparation assemblies along the first direction a, and the film material pickup member to slide relative to the first frame 31 along the first direction a to move to the positions corresponding to the at least two film material preparation assemblies, the structure of the feeding mechanism is relatively simple and convenient to implement.

In some embodiments of this disclosure, referring to FIG. 1, FIG. 2, and FIG. 3, the film material may be supported on an upper side of the film material preparation assembly, the first frame 31 spans across above the film material preparation assembly, and an orientation of the pickup member is downward to acquire the film material on the film material preparation assembly.

In some embodiments of this disclosure, referring to FIG. 1, FIG. 2, and FIG. 3, multiple film material conveying submodules 3 may be provided to perform multi-station loading. For example, two film material conveying submodules 3 may be provided. Multiple film material feeding submodules are arranged side by side along a direction perpendicular to the first direction a.

In some embodiments of this disclosure, referring to FIG. 1, FIG. 2, and FIG. 3, the film material preparation assembly includes a base preparation member 32 and a film preparation member 33, and the base preparation member 32 and the film preparation member 33 are arranged along the first direction a.

The base preparation member 32 in the embodiments of this disclosure is configured to accommodate a base, and the base is one type of film material. The film preparation member 33 in the embodiments of this disclosure is configured to accommodate a film, and the film is one type of film material. The film and the base have the same meanings as commonly understood by persons skilled in the art, and the film and the base are configured to be hot-melt connected to form a cell film.

By enabling the base preparation member 32 and the film preparation member 33 to be arranged along the first direction a, the film material pickup member can slide relative to the first frame 31 to move to positions corresponding to the base preparation member 32 and the film preparation member 33 respectively, that is, one film material pickup member can achieve material pickup from the base preparation member 32 and the film preparation member 33, which is convenient to implement and conducive to reducing costs. Moreover, even if two film material pickup members are provided, and the two film material pickup members acquire the film material from the base preparation member 32 and the film preparation member 33 respectively, the base preparation member 32 and the film preparation member 33 being arranged along the first direction a enables the two film material pickup members to be connected to the first frame 31 via a same slide rail extending along the first direction a, which is convenient to implement and conducive to reducing costs.

In some embodiments of this disclosure, referring to FIG. 1, FIG. 2, and FIG. 3, the number of the film material pickup members is at least two, and the at least two film material pickup members include a base pickup member and a film pickup member; and along the first direction a, all base preparation members 32 are adjacently disposed, and all film preparation members 33 are adjacently disposed.

The base pickup member in the embodiments of this disclosure is configured to acquire the base from the base preparation member 32, and the film pickup member is configured to acquire the film from the film preparation member 33.

By enabling all base preparation members 32 to be adjacently disposed and all film preparation members 33 to be adjacently disposed, the risk of interference during movement of the base pickup member and the film pickup member relative to the frame is reduced.

In some embodiments of this disclosure, referring to FIG. 1, FIG. 2, and FIG. 3, the film material preparation assembly includes a base preparation member 32 and/or a film preparation member 33; the first frame 31 is relatively fixed to a hot-melt machine 34; and along the first direction a, the film material pickup member is capable of moving relative to the first frame 31 to a position flush with the hot-melt machine 34 so as to convey the base and/or the film from the film material preparation assembly to the hot-melt machine 34 to form a cell film.

By enabling the film material pickup member to slide relative to the first frame 31 to move to positions flush with the film material preparation assembly and the hot-melt machine 34 respectively to convey the base and/or the film to the hot-melt machine 34, and enabling the hot-melt machine 34 to hot-melt the base and the film to form the cell film, the structure of the film material feeding mechanism is relatively simple and convenient to implement.

In some embodiments of this disclosure, referring to FIG. 1, FIG. 2, and FIG. 3, along the first direction a, among the hot-melt machine 34 and all film material preparation assemblies, all film material preparation assemblies are adjacently disposed.

By enabling all film material preparation assemblies to be adjacently disposed, and the hot-melt machine 34 to be disposed on one side of all film material preparation assemblies, a space around the hot-melt machine 34 is relatively large, facilitating provision of a conveying mechanism near the hot-melt machine 34 to convey the cell film formed by the hot-melt machine 34 to the assembly module.

In some embodiments of this disclosure, referring to FIG. 1, FIG. 4, and FIG. 5, the cladding material conveying module includes a shell material conveying submodule 4, the shell material conveying submodule 4 includes a shell material feeding mechanism 41 and at least two shell material preparation assemblies 42, and the shell material feeding mechanism 41 is configured to acquire a shell material from the at least two shell material preparation assemblies 42 respectively for conveying.

The shell material feeding mechanism 41 in the embodiments of this disclosure is one type of feeding mechanism included in the cladding material conveying module, that is, the cladding material conveying module may include a plurality of feeding mechanisms, and several of the plurality of feeding mechanisms are shell material feeding mechanisms 41.

The shell material preparation assembly 42 in the embodiments of this disclosure is one type of preparation assembly included in the cladding material conveying module, that is, the cladding material conveying module may include a plurality of preparation assemblies, and several of the preparation assemblies are shell material preparation assemblies 42. All shell material preparation assemblies 42 in the embodiments of this disclosure are configured to accommodate the shell material, and the shell material, that is, a cell shell, is one type of cladding material. Generally, the shell material is an aluminum shell. A cover material configured to be welded with the shell material is a cell top cover, the bare cell is placed into the shell material through an opening on the shell material, and the cover material is welded to the opening and enclose with the shell material to form a sealed space for accommodating the bare cell.

By enabling the shell material feeding mechanism 41 to acquire the shell material from the at least two shell material preparation assemblies 42 respectively for conveying, when the shell material feeding mechanism 41 acquires the shell material from one shell material preparation assembly 42 for conveying, the remaining shell material preparation assemblies 42 are in an idle state, facilitating replenishment, so that during operation of the bare cell encasing production line, at least one of all shell material preparation assemblies 42 accommodates the shell material, the shell material feeding mechanism 41 can always acquire the shell material for conveying, and the bare cell encasing production line does not need to stop when the shell material on one shell material preparation assembly 42 is depleted, which is conducive to improving the production efficiency.

In some embodiments of this disclosure, referring to FIG. 1, FIG. 4, and FIG. 5, the shell material conveying submodule 4 further includes an infeed conveyor line 43 and a transfer mechanism; the infeed conveyor line 43 extends from an infeed position to a position corresponding to the shell material feeding mechanism 41 to convey the shell material preparation assembly 42 from the infeed position to the position corresponding to the shell material feeding mechanism 41, enabling the shell material feeding mechanism 41 to acquire the shell material from the shell material preparation assembly 42 for conveying; the transfer mechanism has an extended state and a retracted state; and along a height direction of the infeed conveyor line 43, when the transfer mechanism is in the retracted state, the transfer mechanism does not exceed a side of the infeed conveyor line 43 configured to place the shell material preparation assembly 42; and when the transfer mechanism is in the extended state, the transfer mechanism exceeds the side of the infeed conveyor line 43 configured to place the shell material preparation assembly 42 to lift the shell material preparation assembly 42 from the infeed conveyor line 43 and convey the shell material preparation assembly 42 to one side of the infeed conveyor line 43, enabling the infeed conveyor line 43 to drive at least two shell material preparation assemblies 42 to the position corresponding to the shell material feeding mechanism 41 respectively.

By enabling the transfer mechanism to transfer the shell material preparation assembly 42 on the infeed conveyor line 43 to one side of the infeed conveyor line 43, the infeed conveyor line 43 can drive the at least two shell material preparation assemblies 42 from the infeed position to the position corresponding to the shell material feeding mechanism 41 respectively, enabling the shell material feeding mechanism 41 to acquire the shell material from the at least two shell material preparation assemblies 42 respectively for conveying, achieving non-stop operation of the bare cell encasing production line, which is relatively convenient to implement.

For example, the infeed conveyor line 43 first conveys a first shell material preparation assembly 42 from the infeed position to the position corresponding to the shell material feeding mechanism 41, and the shell material feeding mechanism 41 acquires the shell material on the first shell material preparation assembly 42 for conveying. When the shell material on the first shell material preparation assembly 42 is depleted, the transfer mechanism transfers the first shell material preparation assembly 42 to one side of the infeed conveyor line 43, and then the infeed conveyor line 43 conveys a second shell material preparation assembly 42 from the infeed position to the position corresponding to the shell material feeding mechanism 41, enabling the shell material feeding mechanism 41 to acquire the shell material on the second shell material preparation assembly 42 for conveying, thereby enabling the shell material feeding mechanism 41 to acquire the shell material from the at least two shell material preparation assemblies 42 respectively for conveying.

In addition, by enabling the transfer mechanism to transfer the shell material preparation assembly 42 by lifting the shell material preparation assembly 42 from the infeed conveyor line 43, the transfer mechanism is unlikely to affect an operation of the shell material feeding mechanism 41 acquiring the shell material from the shell material preparation assembly 42. Generally, the shell material feeding mechanism 41 is disposed on an upper side of the infeed conveyor line 43, and the position corresponding to the shell material feeding mechanism 41 on the infeed conveyor line 43 is directly below the shell material feeding mechanism 41. It can be understood that the upper side of the infeed conveyor line 43 is configured to place the shell material preparation assembly 42, and the shell material feeding mechanism 41 being disposed on the upper side of the infeed conveyor line 43 can conveniently acquire the material. The transfer mechanism transfers the shell material preparation assembly 42 by lifting the shell material preparation assembly 42 from the infeed conveyor line 43 from bottom to top, making the transfer mechanism unlikely to have a significant impact on the shell material feeding mechanism 41.

In some embodiments of this disclosure, referring to FIG. 1, FIG. 4, and FIG. 5, a material rack is provided at the infeed position, the material rack is configured to carry the shell material preparation assembly 42, and the infeed conveyor line 43 acquires the shell material preparation assembly 42 from the material rack and conveys the shell material preparation assembly 42 to the position corresponding to the shell material feeding mechanism 41. A bottom of the material rack may be provided with a movement mechanism such as rollers to facilitate movement of the material rack. After the infeed conveyor line 43 acquires the shell material preparation assembly 42 from a first material rack and conveys the shell material preparation assembly 42 to the position corresponding to the shell material feeding mechanism 41, the first material rack can be moved away from a loading position, and then a second material rack is moved to the loading position, the second material rack carrying a shell material preparation assembly 42 accommodating the shell material; after the shell material on the shell material preparation assembly 42 conveyed from the first material rack to the infeed conveyor line 43 is depleted, the transfer mechanism transfers that shell material preparation assembly 42 to one side of the infeed conveyor line 43, enabling the infeed conveyor line 43 to acquire the shell material preparation assembly 42 from the second material rack and convey the shell material preparation assembly 42 to the loading position, which is conducive to improving production efficiency.

In some embodiments of this disclosure, referring to FIG. 1, FIG. 4, and FIG. 5, the infeed conveyor line 43 is an infeed roller conveyor; a first gap is provided between two adjacent rollers of the infeed roller conveyor along a length direction b of the infeed roller conveyor; and the transfer mechanism is disposed corresponding to the first gap, enabling the transfer mechanism to pass through the first gap along a height direction of the infeed roller conveyor so as to lift the shell material preparation assembly 42 from the infeed roller conveyor.

By enabling the transfer mechanism to pass through the first gap to lift the shell material preparation assembly 42 from the infeed roller conveyor, the transfer mechanism can support a middle portion of the shell material preparation assembly 42 along the length direction b of the infeed roller conveyor so as to lift the shell material preparation assembly 42 from the infeed roller conveyor; and a supporting effect of the transfer mechanism on the shell material preparation assembly 42 is relatively stable.

In some embodiments of this disclosure, referring to FIG. 1, FIG. 4, and FIG. 5, multiple transfer mechanisms may be provided, and the multiple transfer mechanisms are disposed corresponding to multiple first gaps respectively. This is conducive to improving stability of support of the transfer mechanisms for the shell material preparation assembly 42. In some embodiments of this disclosure, the multiple transfer mechanisms may be disposed in a one-to-one correspondence with the multiple first gaps.

In some embodiments of this disclosure, referring to FIG. 1, FIG. 4, and FIG. 5, the first gap penetrates a first side of the infeed roller conveyor along a width direction c of the infeed roller conveyor; the shell material conveying submodule 4 further includes an outfeed roller conveyor 44, a second gap is provided between two adjacent rollers of the outfeed roller conveyor 44 along an outfeed direction, and the second gap penetrates a first side of the outfeed roller conveyor 44 along a width direction of the outfeed roller conveyor 44, enabling the transfer mechanism to move from the first gap to the second gap through the first side of the infeed roller conveyor and the first side of the outfeed roller conveyor 44 so as to drive the shell material preparation assembly 42 to move from the infeed roller conveyor to the outfeed roller conveyor 44, so that the outfeed roller conveyor 44 conveys the shell material preparation assembly 42 to an outfeed bracket.

In the embodiments of this disclosure, through the first side of the infeed roller conveyor and the first side of the outfeed roller conveyor 44, the transfer mechanism being able to move from the first gap to the second gap so as to drive the shell material preparation assembly 42 to move from the infeed roller conveyor to the outfeed roller conveyor 44 means that the transfer mechanism, while maintaining the extended state, can first move along the width direction c of the infeed roller conveyor, that is, moving along an axial direction of rollers of the infeed roller conveyor, to pass through the first side of the infeed roller conveyor along the width direction c of the infeed roller conveyor and move to one side of the infeed roller conveyor; then, while maintaining the extended state, the transfer mechanism can further move along the width direction of the outfeed roller conveyor 44 to pass through the first side of the outfeed roller conveyor 44 along the width direction of the outfeed roller conveyor 44 and move into the second gap; and finally, the transfer mechanism switches from the extended state to the retracted state, the transfer mechanism descends, and the shell material preparation assembly 42 descends accordingly to an upper side of the outfeed roller conveyor 44, enabling the outfeed roller conveyor 44 to convey the shell material preparation assembly 42.

By enabling the transfer mechanism to drive the shell material preparation assembly 42 to move away from the infeed roller conveyor through the first side of the infeed roller conveyor, transfer of the shell material preparation assembly 42 is relatively convenient. By enabling the transfer mechanism to move to the second gap through the first side of the outfeed roller conveyor 44 so as to drive the shell material preparation assembly 42 to move from the infeed roller conveyor to the outfeed roller conveyor 44, when the transfer mechanism places the shell material preparation assembly 42 onto the outfeed roller conveyor 44, a supporting area of the outfeed roller conveyor 44 for the shell material preparation assembly 42 is relatively large, making a supporting effect of the outfeed roller conveyor 44 on the shell material preparation assembly 42 relatively stable.

In some embodiments of this disclosure, referring to FIG. 1, FIG. 4, and FIG. 5, multiple transfer mechanisms may be provided, and the multiple transfer mechanisms are disposed corresponding to multiple first gaps respectively. Multiple second gaps are provided, and the multiple second gaps are disposed in a one-to-one correspondence with the multiple first gaps, and a corresponding transfer mechanism is configured to move to a corresponding second gap through a first side of a corresponding first gap and a first side of the corresponding second gap. This is conducive to improving stability of movement during transfer of the shell material preparation assembly 42.

In some embodiments of this disclosure, referring to FIG. 1, FIG. 4, and FIG. 5, the first gap penetrates a first side of the infeed roller conveyor along a width direction c of the infeed roller conveyor; the shell material conveying submodule 4 further includes an outfeed roller conveyor 44, a second gap is provided between adjacent rollers of the outfeed roller conveyor 44 along the outfeed direction, and the second gap penetrates a first side of the outfeed roller conveyor 44 along a width direction of the outfeed roller conveyor 44; the transfer mechanism includes a lifting member and a transfer conveyor line disposed at a top end of the lifting member, and when the transfer mechanism is in the extended state, one end of the lifting member is located in the first gap, and another end extends to the second gap through the first side of the infeed roller conveyor and the first side of the outfeed roller conveyor 44; and an extension path of the transfer conveyor line matches an extension path of the lifting member, enabling the transfer conveyor line to convey the shell material preparation assembly 42 from the infeed roller conveyor to the outfeed roller conveyor 44, so that the outfeed roller conveyor 44 conveys the shell material preparation assembly 42 to the outfeed bracket.

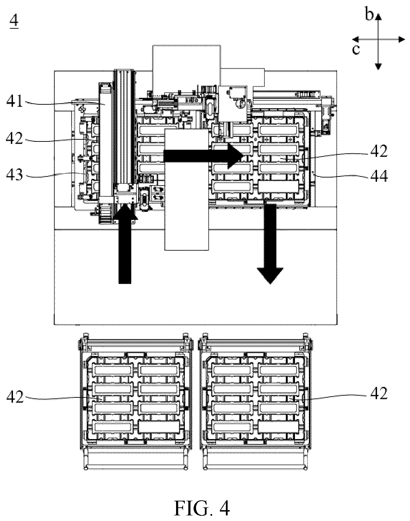

Black arrows in FIG. 4 indicate a movement direction of the shell material preparation assembly 42 driven by the infeed roller conveyor, the transfer mechanism, and the outfeed roller conveyor 44. The shell material preparation assembly 42 is now moved from the infeed position to the position corresponding to the shell material feeding mechanism 41 under the drive of the infeed roller conveyor, then moved to the outfeed roller conveyor 44 under the drive of the transfer mechanism, and then moved to an outfeed position under the drive of the outfeed roller conveyor 44.

By enabling the lifting member to extend to one side of the infeed roller conveyor through the first side of the infeed roller conveyor, the transfer conveyor line disposed on the lifting member can convey the shell material preparation assembly 42 to one side of the infeed roller conveyor along the width direction c of the infeed roller conveyor, which is convenient to implement. By enabling the lifting member to extend to the second gap of the outfeed roller conveyor 44 through the first side of the outfeed roller conveyor 44, the transfer conveyor line disposed on the lifting member can convey the shell material preparation assembly 42 to the outfeed roller conveyor 44 along the width direction of the outfeed roller conveyor 44, which is convenient to implement. Moreover, when the transfer mechanism places the shell material preparation assembly 42 onto the outfeed roller conveyor 44, the supporting area of the outfeed roller conveyor 44 for the shell material preparation assembly 42 is relatively large, making the supporting effect of the outfeed roller conveyor 44 on the shell material preparation assembly 42 relatively stable.

In some embodiments of this disclosure, referring to FIG. 1, FIG. 4, and FIG. 5, multiple transfer mechanisms may be provided, and the multiple transfer mechanisms are disposed corresponding to multiple first gaps respectively. Multiple second gaps are provided, and the multiple second gaps are disposed in a one-to-one correspondence with the multiple first gaps, and when the transfer mechanism is in the extended state, the transfer mechanism extends from a corresponding first gap to a corresponding second gap through a first side of the corresponding first gap and a first side of the corresponding second gap. This is conducive to improving stability of movement during transfer of the shell material preparation assembly 42.

In some embodiments of this disclosure, referring to FIG. 1, FIG. 4, and FIG. 5, the outfeed roller conveyor 44 and the infeed roller conveyor are arranged along the width direction c of the infeed roller conveyor.

By enabling the outfeed roller conveyor 44 and the infeed roller conveyor to be arranged along the width direction c of the infeed roller conveyor, the transfer mechanism only needs to drive the shell material preparation assembly 42 to move along the width direction of the outfeed roller conveyor 44 so as to convey the shell material preparation assembly 42 to the outfeed roller conveyor 44, which is convenient to implement.

In some embodiments of this disclosure, referring to FIG. 1, FIG. 4, and FIG. 5, the width direction of the outfeed roller conveyor 44 is parallel to the width direction c of the infeed roller conveyor.

By enabling the width direction of the outfeed roller conveyor 44 to be parallel to the width direction c of the infeed roller conveyor, during a process in which the shell material preparation assembly 42 moves from the infeed roller conveyor to the outfeed roller conveyor 44, a movement path does not need to have a significant bend, which is convenient to implement.

In some embodiments of this disclosure, referring to FIG. 1, FIG. 4, and FIG. 5, the outfeed roller conveyor 44 includes a first roller and a second roller, the first roller and the second roller forming the first gap; the outfeed roller conveyor 44 includes a third roller and a fourth roller, the third roller and the fourth roller forming the second gap; and along the length direction b of the infeed roller conveyor, the first roller is flush with the third roller, and the second roller is flush with the fourth roller.

By enabling the first roller to be flush with the third roller and the second roller to be flush with the fourth roller along the length direction b of the infeed roller conveyor, a portion of the transfer mechanism supporting the shell material preparation assembly 42 only needs to move along the width direction of the outfeed roller conveyor 44 so as to convey the shell material preparation assembly 42 to the outfeed roller conveyor 44, which is convenient to implement.

In some embodiments of this disclosure, referring to FIG. 1, FIG. 4, and FIG. 5, the height direction of the outfeed roller conveyor 44 is parallel to a height direction of the infeed roller conveyor.

By enabling the height direction of the outfeed roller conveyor 44 to be parallel to the height direction of the infeed roller conveyor, during a process in which the shell material preparation assembly 42 is transferred from the infeed roller conveyor to the outfeed roller conveyor 44, a posture of the shell material preparation assembly 42 does not need to undergo significant changes, and the outfeed roller conveyor 44 can provide relatively stable support to the shell material preparation assembly 42, facilitating convenient implementation of the transfer mechanism for transferring the shell material preparation assembly 42.

In some embodiments of this disclosure, referring to FIG. 1, FIG. 4, and FIG. 5, the outfeed roller conveyor 44 is flush with the infeed roller conveyor along the height direction. This is conducive to reducing space occupied by the arrangement of the outfeed roller conveyor 44 and the infeed roller conveyor and facilitates the transfer operation of the transfer mechanism.

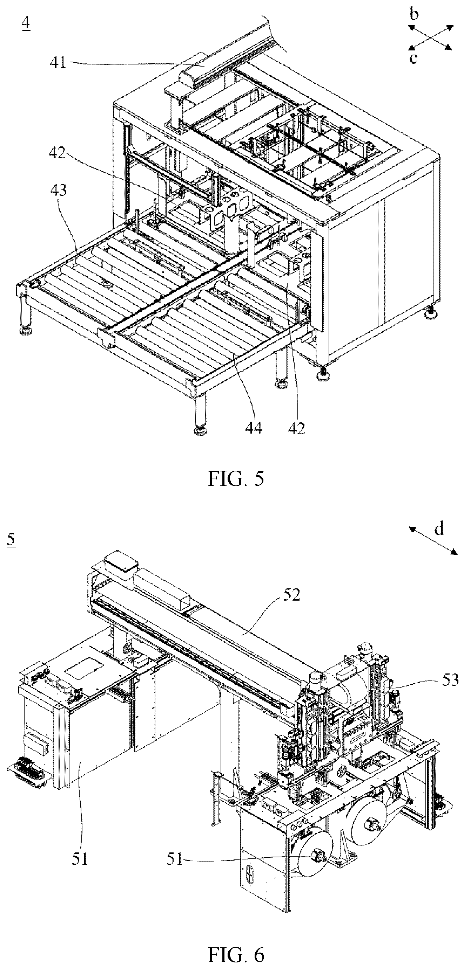

In some embodiments of this disclosure, referring to FIG. 1 and FIG. 6, the cladding material conveying module includes an adhesive material conveying submodule 5, the adhesive material conveying submodule 5 includes an adhesive material feeding mechanism and at least two adhesive material preparation assemblies 51, and the adhesive material feeding mechanism is configured to acquire an adhesive material from the at least two adhesive material preparation assemblies 51 respectively for conveying.

The adhesive material feeding mechanism in the embodiments of this disclosure is one type of feeding mechanism included in the cladding material conveying module, that is, the cladding material conveying module may include a plurality of feeding mechanisms, and several of the plurality of feeding mechanisms are adhesive material feeding mechanisms.

The adhesive material preparation assembly 51 in the embodiments of this disclosure is one type of preparation assembly included in the cladding material conveying module, that is, the cladding material conveying module may include a plurality of preparation assemblies, and several of the plurality of preparation assemblies are adhesive material preparation assemblies 51. All adhesive material preparation assemblies 51 in the embodiments of this disclosure are configured to accommodate the adhesive material, and the adhesive material is one type of cladding material. In some embodiments of this disclosure, the adhesive material may be blue glue.

By enabling the adhesive material feeding mechanism to acquire the adhesive material from the at least two adhesive material preparation assemblies respectively for conveying, when the adhesive material feeding mechanism acquires the adhesive material from one adhesive material preparation assembly for conveying, the remaining adhesive material preparation assemblies are in an idle state, facilitating replenishment, so that during operation of the bare cell encasing production line, at least one of all adhesive material preparation assemblies accommodates the adhesive material, the adhesive material feeding mechanism can always acquire the adhesive material for conveying, and the bare cell encasing production line does not need to stop when the adhesive material on one adhesive material preparation assembly is depleted, which is conducive to improving the production efficiency.

In some embodiments of this disclosure, referring to FIG. 1 and FIG. 6, the adhesive material feeding mechanism includes a second frame 52 and an adhesive material pickup member 53, the second frame 52 is relatively fixed to the at least two adhesive material preparation assemblies 51, and the adhesive material pickup member 53 is movably disposed on the second frame 52, enabling the adhesive material pickup member 53 to move relative to the second frame 52 to positions corresponding to the at least two adhesive material preparation assemblies 51 respectively so as to acquire the adhesive material from the at least two adhesive material preparation assemblies 51 respectively, so that the adhesive material feeding mechanism acquires the adhesive material from the at least two adhesive material preparation assemblies 51 respectively for conveying.

By enabling the second frame 52 to be relatively fixed to the at least two adhesive material preparation assemblies, and the adhesive material pickup member to move relative to the second frame 52 to the positions corresponding to the at least two adhesive material preparation assemblies respectively so as to acquire the adhesive material for conveying, the structure of the adhesive material feeding mechanism is relatively simple and convenient to implement.

In some embodiments of this disclosure, referring to FIG. 1 and FIG. 6, the at least two adhesive material preparation assemblies 51 are arranged along a second direction d; and the adhesive material pickup member 53 is slidably connected to the second frame 52 along the second direction d, enabling the adhesive material pickup member 53 to move to the positions corresponding to the at least two adhesive material preparation assemblies 51 respectively.

The second direction d in the embodiments of this disclosure may extend along a straight line or may not extend along a straight line, such as extending along a curve or a polyline.

By enabling the second frame 52 to span across the at least two adhesive material preparation assemblies along the second direction d, and the adhesive material pickup member to slide relative to the second frame 52 along the second direction d to move to the positions corresponding to the at least two adhesive material preparation assemblies, the structure of the feeding mechanism is relatively simple and convenient to implement.

In some embodiments of this disclosure, referring to FIG. 1 and FIG. 6, the adhesive material feeding mechanism further includes an adhesive manipulator, the adhesive manipulator is slidably connected to the second frame 52 along the second direction d, the adhesive manipulator slides synchronously with the adhesive material pickup member 53 relative to the second frame 52 so as to synchronously move to positions corresponding to at least two adhesive material preparation assemblies 51 respectively, and after the adhesive material pickup member 53 acquires the adhesive material, the manipulator adheres the adhesive material onto the bare cell.

In some embodiments of this disclosure, multiple adhesive material conveying modules may be provided to perform multi-station loading. For example, two adhesive material conveying modules may be provided. In some embodiments of this disclosure, multiple adhesive material conveying modules may be arranged side by side along a direction perpendicular to the second direction d.

In some embodiments of this disclosure, referring to FIG. 1 and FIG. 6, the cladding material conveying module includes a film material conveying submodule 3, a shell material conveying submodule 4, and an adhesive material conveying submodule 5; the film material conveying submodule 3 includes a film material feeding mechanism and at least two film material preparation assemblies, and the film material feeding mechanism is configured to acquire the film material from the at least two film material preparation assemblies respectively for conveying; the adhesive material conveying submodule 5 includes an adhesive material feeding mechanism and at least two adhesive material preparation assemblies 51, and the adhesive material feeding mechanism is configured to acquire the adhesive material from the at least two adhesive material preparation assemblies 51 respectively for conveying; the shell material conveying submodule 4 includes a shell material feeding mechanism 41 and at least two shell material preparation assemblies 42, and the shell material feeding mechanism 41 is configured to acquire the shell material from at least two shell material preparation assemblies 42 respectively for conveying; and along a conveying direction of the bare cell conveying module 1, an output end of the film material conveying submodule 3, an output end of the adhesive material conveying submodule 5, and an output end of the shell material conveying submodule 4 are sequentially arranged.

By enabling the film material feeding mechanism, the adhesive material preparation assemblies 51, and the shell material feeding mechanism 41 to acquire the film material from corresponding the at least two corresponding preparation assemblies respectively for conveying, the film material conveying submodule 3, the shell material conveying submodule 4, and the adhesive material conveying submodule 5 can all perform non-stop feeding, which is conducive to improving the production efficiency.

In some embodiments of this disclosure, referring to FIG. 1 and FIG. 6, the bare cell encasing production line further includes a cell combining module 6; and along a conveying direction of the bare cell conveying module 1, the cell combining module 6, the output end of the film material conveying submodule 3, the output end of the adhesive material conveying submodule 5, and the output end of the shell material conveying submodule 4 are sequentially arranged, the cell combining module 6 is configured to combine two bare cells, and the combined bare cell is conveyed by the bare cell conveying module 1 to the output end of the film material conveying submodule 3 for film cladding. In some embodiments of this disclosure, a double-layer internal circulation channel 7 is further provided between the cell combining module 6 and the output end of the film material conveying submodule 3, and the combined bare cell is conveyed to the output end of the film material conveying submodule 3 through the double-layer internal circulation channel 7.

In some embodiments of this disclosure, referring to FIG. 1 and FIG. 6, a side hot-melt module 8 is further provided between the output end of the film material conveying submodule 3 and the output end of the adhesive material conveying submodule 5, and after the bare cell is assembled with the film material, the bare cell undergoes side hot-melting at the side hot-melt module 8 before conveyed to the output end of the adhesive material conveying submodule 5.

In some embodiments of this disclosure, referring to FIG. 1 and FIG. 6, along the conveying direction of the bare cell conveying module 1, the cell combining module 6, the double-layer internal circulation channel 7, a film material assembly submodule 21, the side hot-melt module 8, an adhesive material assembly submodule 23, and a shell material assembly submodule 22 are sequentially arranged. The film material assembly submodule 21 is connected to the output end of the film material conveying submodule 3, the shell material assembly submodule 22 is connected to the output end of the shell material conveying submodule 4, and the adhesive material assembly submodule 23 is connected to the output end of the adhesive material conveying submodule 5. Two bare cells are first conveyed by the bare cell conveying module 1 to the cell combining module 6 for combining; after combined, the bare cells are transferred through the double-layer internal circulation channel 7 to the film material assembly submodule 21 for film cladding; after film cladding, the bare cells are transferred to the side hot-melt module 8 for side hot-melting; after side hot-melting, the bare cells are transferred to the adhesive material assembly submodule 23 for blue glue adhesion and after blue glue adhesion, the bare cells are transferred to the shell material assembly submodule 22; and the shell material assembly submodule 22 installs the bare cell into the shell material.

The above embodiments are only used to illustrate the technical solutions of this disclosure and are not intended to limit this disclosure; although this disclosure has been described in detail with reference to the foregoing embodiments, persons of ordinary skill in the art should understand that modifications can still be made to the technical solutions described in the foregoing embodiments, or equivalent replacements can be made to some or all of the technical features therein; and these modifications or replacements do not cause the essence of the corresponding technical solutions to depart from the scope of the technical solutions of the embodiments of this disclosure, and all such modifications and equivalent replacements shall fall within the scope of the specification of this disclosure. In particular, as long as there is no structural conflict, various technical features mentioned in the embodiments can be combined in any manner.

## Claims

1. A bare cell encasing production line, comprising:
a bare cell conveying module, wherein the bare cell conveying module is configured to convey a bare cell;
a cladding material conveying module, wherein the cladding material conveying module comprises a feeding mechanism and at least two preparation assemblies, the at least two preparation assemblies are identical to accommodate an identical cladding material, and the feeding mechanism is configured to acquire the identical cladding material from the identical preparation assemblies respectively for conveying; and
an assembly module, wherein an output end of the cladding material conveying module and the bare cell conveying module are both connected to the assembly module, and the assembly module is configured to assemble the bare cell conveyed by the bare cell conveying module with the cladding material conveyed by the cladding material conveying module;
the cladding material conveying module comprises a shell material conveying submodule; the shell material conveying submodule comprises a shell material feeding mechanism and at least two shell material preparation assemblies; and
the shell material conveying submodule further comprises an infeed conveyor line and a transfer mechanism; the infeed conveyor line extends from an infeed position to a position corresponding to the shell material feeding mechanism; the transfer mechanism has an extended state and a retracted state; and along a height direction of the infeed conveyor line, when the transfer mechanism is in the retracted state, the transfer mechanism does not exceed a side of the infeed conveyor line configured to place the shell material preparation assembly; and when the transfer mechanism is in the extended state, the transfer mechanism exceeds the side of the infeed conveyor line configured to place the shell material preparation assembly to lift the shell material preparation assembly from the infeed conveyor line and convey the shell material preparation assembly to one side of the infeed conveyor line, enabling the shell material feeding mechanism to acquire a shell material from the at least two shell material preparation assemblies respectively for conveying.

2. The bare cell encasing production line according to claim 1, wherein the cladding material conveying module comprises a film material conveying submodule, the film material conveying submodule comprises a film material feeding mechanism and at least two film material preparation assemblies, and the film material feeding mechanism is configured to acquire a film material from the at least two film material preparation assemblies respectively for conveying.

3. The bare cell encasing production line according to claim 2, wherein the film material feeding mechanism comprises a first frame and a film material pickup member, the first frame is relatively fixed to the at least two film material preparation assemblies, and the film material pickup member is movably disposed on the first frame, enabling the film material pickup member to move relative to the first frame to positions corresponding to the at least two film material preparation assemblies respectively so as to acquire the film material from the at least two film material preparation assemblies respectively, so that the film material feeding mechanism acquires the film material from the at least two film material preparation assemblies respectively for conveying.

4. The bare cell encasing production line according to claim 3, wherein the at least two film material preparation assemblies are arranged along a first direction; the first frame spans across the at least two film material preparation assemblies along the first direction, and the film material pickup member is slidably connected to the first frame along the first direction, enabling the film material pickup member to move along the first direction to positions flush with the at least two film material preparation assemblies respectively so as to acquire the film material from the at least two film material preparation assemblies respectively for conveying.

5. The bare cell encasing production line according to claim 4, wherein the film material preparation assembly comprises a base preparation member and a film preparation member, and the base preparation member and the film preparation member are arranged along the first direction.

6. The bare cell encasing production line according to claim 5, wherein the number of the film material pickup members is at least two, and the at least two film material pickup members comprise a base pickup member and a film pickup member; and along the first direction, all base preparation members are adjacently disposed, and all film preparation members are adjacently disposed.

7. The bare cell encasing production line according to any one of claims 4 to 6, wherein the film material preparation assembly comprises a base preparation member and/or a film preparation member; the first frame is relatively fixed to a hot-melt machine; and along the first direction, the film material pickup member is capable of moving relative to the first frame to a position flush with the hot-melt machine so as to convey the base and/or the film from the film material preparation assembly to the hot-melt machine to form a cell film.

8. The bare cell encasing production line according to claim 7, wherein along the first direction, among the hot-melt machine and all film material preparation assemblies, all film material preparation assemblies are adjacently disposed.

9. The bare cell encasing production line according to any one of claims 1 to 8, wherein the infeed conveyor line is an infeed roller conveyor; a first gap is provided between two adjacent rollers of the infeed roller conveyor along a length direction of the infeed roller conveyor; and the transfer mechanism is disposed corresponding to the first gap, enabling the transfer mechanism to pass through the first gap along a height direction of the infeed roller conveyor so as to lift the shell material preparation assembly from the infeed roller conveyor.

10. The bare cell encasing production line according to claim 9, wherein the first gap penetrates a first side of the infeed roller conveyor along a width direction of the infeed roller conveyor; and
the shell material conveying submodule further comprises an outfeed roller conveyor, a second gap is provided between two adjacent rollers of the outfeed roller conveyor along an outfeed direction, and the second gap penetrates a first side of the outfeed roller conveyor along a width direction of the outfeed roller conveyor, enabling the transfer mechanism to move from the first gap to the second gap through the first side of the infeed roller conveyor and the first side of the outfeed roller conveyor so as to drive the shell material preparation assembly to move from the infeed roller conveyor to the outfeed roller conveyor, so that the outfeed roller conveyor conveys the shell material preparation assembly to an outfeed bracket.

11. The bare cell encasing production line according to claim 9, wherein the first gap penetrates a first side of the infeed roller conveyor along a width direction of the infeed roller conveyor;
the shell material conveying submodule further comprises an outfeed roller conveyor, a second gap is provided between adjacent rollers of the outfeed roller conveyor along an outfeed direction, and the second gap penetrates a first side of the outfeed roller conveyor along a width direction of the outfeed roller conveyor; and
the transfer mechanism comprises a lifting member and a transfer conveyor line disposed at a top end of the lifting member, and when the transfer mechanism is in the extended state, one end of the lifting member is located in the first gap, and another end extends to the second gap through the first side of the infeed roller conveyor and the first side of the outfeed roller conveyor; and an extension path of the transfer conveyor line matches an extension path of the lifting member, enabling the transfer conveyor line to convey the shell material preparation assembly from the infeed roller conveyor to the outfeed roller conveyor, so that the outfeed roller conveyor conveys the shell material preparation assembly to an outfeed bracket.

12. The bare cell encasing production line according to claim 10 or 11, wherein the outfeed roller conveyor and the infeed roller conveyor are arranged along the width direction of the infeed roller conveyor.

13. The bare cell encasing production line according to claim 12, wherein the width direction of the outfeed roller conveyor is parallel to the width direction of the infeed roller conveyor.

14. The bare cell encasing production line according to claim 12 or 13, wherein the outfeed roller conveyor comprises a first roller and a second roller, the first roller and the second roller forming the first gap; the outfeed roller conveyor comprises a third roller and a fourth roller, the third roller and the fourth roller forming the second gap; and along the length direction of the infeed roller conveyor, the first roller is flush with the third roller, and the second roller is flush with the fourth roller.

15. The bare cell encasing production line according to any one of claims 10 to 14, wherein the height direction of the outfeed roller conveyor is parallel to a height direction of the infeed roller conveyor.

16. The bare cell encasing production line according to any one of claims 1 to 15, wherein the cladding material conveying module comprises an adhesive material conveying submodule, the adhesive material conveying submodule comprises an adhesive material feeding mechanism and at least two adhesive material preparation assemblies, and the adhesive material feeding mechanism is configured to acquire an adhesive material from the at least two adhesive material preparation assemblies respectively for conveying.

17. The bare cell encasing production line according to claim 16, wherein the adhesive material feeding mechanism comprises a second frame and an adhesive material pickup member, the second frame is relatively fixed to the at least two adhesive material preparation assemblies, and the adhesive material pickup member is movably disposed on the second frame, enabling the adhesive material pickup member to move relative to the second frame to positions corresponding to the at least two adhesive material preparation assemblies respectively so as to acquire the adhesive material from the at least two adhesive material preparation assemblies respectively, so that the adhesive material feeding mechanism acquires the adhesive material from the at least two adhesive material preparation assemblies respectively for conveying.

18. The bare cell encasing production line according to claim 17, wherein the at least two adhesive material preparation assemblies are arranged along a second direction; and
the adhesive material pickup member is slidably connected to the second frame along the second direction, enabling the adhesive material pickup member to move to positions corresponding to the at least two adhesive material preparation assemblies respectively.

19. The bare cell encasing production line according to any one of claims 1 to 18, wherein the cladding material conveying module further comprises a film material conveying submodule and an adhesive material conveying submodule; the film material conveying submodule comprises a film material feeding mechanism and at least two film material preparation assemblies, and the film material feeding mechanism is configured to acquire a film material from the at least two film material preparation assemblies respectively for conveying; the adhesive material conveying submodule comprises an adhesive material feeding mechanism and at least two adhesive material preparation assemblies, and the adhesive material feeding mechanism is configured to acquire an adhesive material from the at least two adhesive material preparation assemblies respectively for conveying; and along a conveying direction of the bare cell conveying module, an output end of the film material conveying submodule, an output end of the adhesive material conveying submodule, and an output end of the shell material conveying submodule are sequentially arranged.

20. A cell production line, comprising:
the bare cell encasing production line according to any one of claims 1 to 19;
a welding device configured to weld a cover material with a shell material; and
a conveying device configured to convey an assembly of a bare cell and the shell material from the bare cell encasing production line to the welding device.
